# EUROPEAN PATENT SPECIFICATION

(11) **EP 3 053 631 B1**
(45) Date of publication and mention of the grant of the patent: **17.10.2018**
(21) Application number: 15197432.6
(22) Date of filing: 02.12.2015
(51) Int. Cl.: A63B 63/00, E04B 1/58, E04B 1/24, F16B 12/40

(54) **AN ALUMINIUM SECTION JOINING CORNER ELEMENT AND A GOAL FOR BALL GAMES WITH SUCH ELEMENTS**
ALUPROFIL ECKENVERBINDUNGSELEMENT UND TOR FÜR BALLSPIELE MIT SOLCHEN ELEMENTEN
ELEMENT COIN DE JONCTION DE SECTION D'ALUMINIUM ET UN BUT POUR JEUX DE BALLE AVEC CES ELEMENTS

(30) Priority: 04.12.2014 NO 20141465
(43) Date of publication of application: 10.08.2016
(73) Proprietor: Unisport Scandinavia AS, 3057 Solbergelva (NO)
(72) Inventor: HOLTSMARK, Joar, 3474 ÅROS (NO)
(74) Representative: Heggstad, Jon Dagson

(56) References cited:
- JP-A- 2011 217 958
- US-A- 3 532 369
- US-A- 5 681 231
- US-A1- 2007 145 688
- US-A1- 2013 190 109

## Description

The present invention concerns an aluminum profile joining corner element and a goal for ballgames with such aluminum profile joining elements.

Goals for ballgames include a shape and are dimensioned in relation to the rules of the game. Such goals are in time exposed to considerable mechanical loads. Furthermore are the goals exposed to the environment and wind, such that the properties of the goal and its ability to withstand corrosion, rot, sunlight and so on important.

There is also an issue to be able to disassemble such goals for storage out of season, for transport, to easily be able to use areas where no goals already are and so on. To allow such a mobility it is also essential that the components of the goals are manageable, and that assembly and disassembly easily can be performed with simple tools and by people without any previous skills. It is also an issue that the goal is assembled of internally compatible elements such that assembly is uncomplicated and the risk of erroneous assembly is small. US 2007/145688 describes an assembly including a tubular connector and at least one framing member having a hollow open end and a longitudinally-extending recessed channel. US 5,681,231 describes a collapsible game goal, such as for lacrosse, with joints at the intersections of the uprights with the crossbar and the lower frame members.
It is particularly an object with the invention to provide a solution where electrical or galvanic contact between the various metal types is avoided to prevent galvanic corrosion. In this case is steel, stainless steel and aluminum the most relevant materials. Galvanic corrosion may lead to jamming of the assembly bolts such that they break or deform during attempts of disassembly, or that the lifespan of the various components is reduced. Galvanic corrosion is particularly problematic with aluminium threads. In cases where the threads are in aluminum will corrosion in the threads quickly lead to jamming of the bolts. In the present invention will the treads and the bolts normally be steel, and galvanic corrosion between bolts and treads is thereby less likely.

Accordingly, the present invention concerns an aluminum profile joining corner element as claimed in claim 1 for joining aluminum profiles with an outline. The corner elements include a corner housing with an outline substantially corresponding to the outline of the aluminum profiles. The first and a second substantially straight tubular element extends from the corner housing, as the first tubular element forms an angle on the second tubular element. At least one bolt hole extend through the first and the second tubular element respectively The first and the second substantially straight tubular element and an elbow are shaped out of one single metal tubular piece and form a corner tube. A guiding- and insulating washer is attached in each bolt hole, for insulating between the corner tube and the aluminum profile. The corner housing surrounds the elbow of the corner tube.
Outline is in this connection meant to describe the external shape of the aluminum profiles around a cross section of the aluminum profiles in a plane perpendicular to the longitudinal axis of the aluminum profiles.
The first and the second substantially straight tubular element extending from the corner housing will normally be connected with each other at an elbow, as the first and the second substantially straight tubular element and the elbow is shaped out of one single metal tubular piece and forms a corner tube. The corner housing surrounds the elbow of the corner tube. The metal tube piece is preferably made of galvanized or hot-dip galvanized steel, but may also be made of stainless steel.
The corner housing may include an internal shell made of a first plastic material with an external layer of a second plastic material. The external plastic material may be softer than the internal plastic material. The internal shell may be made of a hard plastic and the external shell may be made of a soft plastic.
The external layer of soft plastic material can be applied by overcasting the internal shell. The overcasting of the soft plastic material has several tasks. The soft, external shell both seals, accommodates for inaccuracies, locks the internal shell together, provides a whole outer side and prevents rubbing sounds and squeaking. The overcasting may in other words be applied after the inner shell is assembled onto the tubular element/tubular elements, and forms the surface facing the aluminum profiles.
The corner housing may include a first shell half and a second shell half connected to the first shell half.
The first shell half and the second shell half can form the shell of hard plastic and the external layer of soft plastic can surround the first shell half and the second shell half.
The guiding- and insulation washer can be shaped of a plastic material and may include an arch shaped portion with an arch adapted to a diameter of the first and the second substantially straight tubular element, and a substantially planer portion adapted to an inner surface of the aluminum profiles to be joined.

Furthermore the invention concerns a goal for ballgames as claimed in claim 7.

The goal may include two, four or six aluminum profile joining corner elements.
The goal may furthermore include an L- or V- shaped stanchion angle with bolt holes for attaching a stanchion, as the stanchion angle includes at least two bolt holes, and as at least two bolts extend through a locking washer, a stanchion angle, an aluminum profile, a guiding- and insulating washer and a substantially straight tubular element respectively, as a threaded element is attached in the substantially straight tubular element for each bolt, and as the bolt is screwed into the threaded element.
The locking washers and the guiding- and insulating washers may be of an electrically insulating material, and the bolt holes in the stanchion angle and the aluminum profiles may include a larger diameter than the bolt such that a substantially straight is element is electrically isolated in relation to the aluminum profiles and the stanchion angle.
Short description of the enclosed figures:
Fig. 1 is a perspective view of a football goal with corners according to the invention;
Fig. 2 is a detail of fig 1 where a corner according to the invention is shown;
Fig. 3 is an exploded view of a corner for a goal according to the invention where the aluminum profiles of the goal are shown;
Fig. 4 is an exploded view of a corner for a goal according to the invention where the components of the goal are shown;
Fig. 5 is crossection of an aluminum profile with a corner according to the invention; and
Fig. 6 is an end section of an aluminum profile that is adapted for joining with a corner according to the invention.

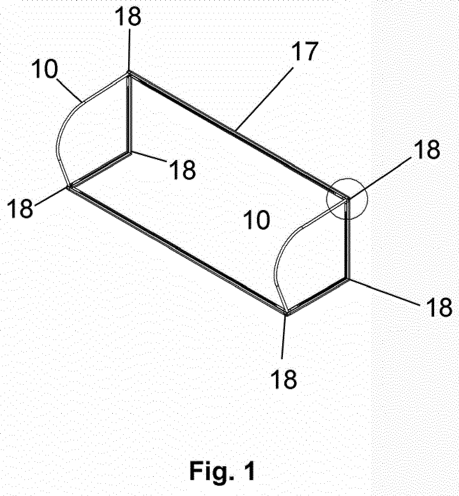

In fig. 1 it is shown a goal 17, typically a football goal, with up to six corner elements 18 of the invention. The goal furthermore includes two stanchions 10 attached in reinforcing stanchion angles. The goal 17 will typically also though include a net (not shown) attached along the aluminum profiles forming the crossbar, the poles and the support elements that also spans the net. The inner opening of the goal is typically 244 cm tall and 732 cm wide. The net is typically attached in the aluminum profiles by suitable hooks.

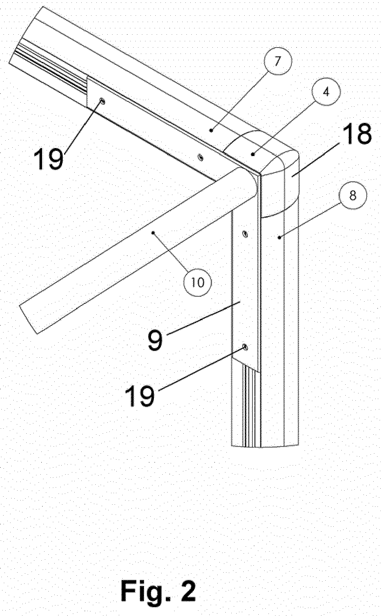

Fig. 2 shows a detail of a corner of the goal shown on fig. 1 where an aluminum profile 7 forms a crossbar, and an aluminum profile 8 forms a post. The post and the crossbar are joined with a corner 18 according to the invention. Corner 18 includes a soft, external plastic cover 4 with substantially the same outline as the aluminum profiles 7, 8 such that it is formed a corner with a smooth transition between the corner 18 and the aluminum profiles 7, 8. The stanchion 10 is attached in an L- or V- shaped stanchion angle 9 with bolt holes 19. The stanchion angle 9 is right angled. The distance between the bolt holes 19 corresponds to the distance between the bolt holes in a corner tube forming a portion of the corner 18.

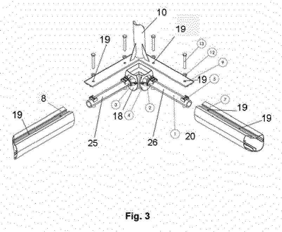

Fig. 3 is an exploded view of the corner shown in fig. 2. The two aluminum profiles 7, 8 include bolt holes 19 aligned with the bolt holes 19 in the stanchion angle 9 and the bolt holes in a corner tube 1. Four bolt holes 19 are shown and four bolts 13 with locking washers 12 extend through the stanchion angles 9, the aluminum profiles 7, 8, one insulation washer and guide 5 for each bolt, through the corner tube 1 and into threads shaped in a threaded sleeve 20 or nut that may be welded to the corner tube 1. The stanchion 10 is welded to the stanchion angle 9. The corner tube 1 includes two straight tubular element portions 25, 26 of substantially the same length connected by a right-angled elbow. The corner 18 includes two plastic shells 2, 3 that are clipped together around the right-angled elbow of the corner tube 1, such that the straight tubular element portions 25, 26 of the corner tube 1 extend out of the plastic shells 2, 3. The plastic shells 2, 3 are surrounded by a soft external plastic shell 4. The corner tube 1 is a bent steel tube with a material thickness ensuring a sufficient rigidity of the corner. Alternatively may the corner tube be made of stainless steel. The elbow in the corner tubular is normally a right-angle. The elbow in the tube preferably has an even radius of curvature to prevent tension concentrations and buckling of the tube. The radius of curvature of the tube is preferably such that a substantially circular cross section is maintained in the elbow. Alternatively may the tube be pressed in the elbow to simplify bending.

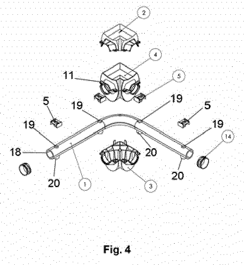

Fig. 4 shows the various components of the corner 18 assembly. The four bolt holes 19 are located in the two straight portions of the corner tube 1 and are of substantially the same length such that there are two bolt holes 19 in each straight portion. The four welded threaded sleeves 20 are located in the bolt holes 19 for attaching the bolts. The four guiding- and insulating washers 5 are located in each bolt hole 19, and include a sleeve shaped portion extending into each bolt hole for holding the guiding- and insulating washers 5 in their location at the corner tube 1 before and during assembly. The two plastic shells 2, 3 and the soft plastic cover may terminate around the corner tube 1 such that it is formed a tubular portion at each straight portion of the corner tube 1 extending out of the plastic shell. Soft rings 14 in the same group of materials as the soft plastic shell 4 lies between the corner tube and the plastic cover due to production technical reasons. These rings enables larger tolerances of diameter of the steel tube, and the plastic cover can thereby more easily be adapted for steel tubes with different diameter. After assembly, the two shell halves 2, 3 and the soft external plastic shell 4 form guiding ribs 11 fitting into rigid guiding ribs internally in the aluminum profiles.

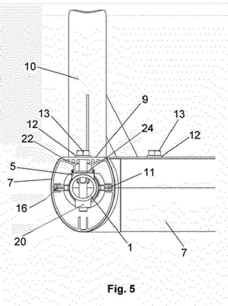

Fig. 5 shows a cross section of an aluminum profile 7 perpendicular to a longitudinal axis of the aluminum profile, when this is used and assembled with a corner. The cross section is taken directly under a bolt 13. The corner tube 1 with a threaded attachment sleeve 20 is tightened towards an inner guiding portion 24 of the aluminum profile 7. The insulating washer- and guide 5 is biased between this internal guiding portion 24 and the corner tube 1. The bolt 13 also extends through the stanchion angle 9, such that the bolt holds the stanchion 10, the aluminum profiles 7, and the corner tube 1 together. The locking washer 12 is made of stainless steel and the insulating washer and the guide 5 may be of an electrically insulation material. The bolt holes may be somewhat larger than both diameter such that it is not directly electrical contact between steel and aluminum. In this way may galvanic corrosion between the various steel and the aluminum components be prevented. The insulating washer isolates between the corner tube of steel and the aluminum profiles. Direct contact between stainless steel and aluminum is not problematic, and similarly is direct contact between stainless steel and steel also unproblematic. Direct contact between steel and aluminum should be avoided. Alternatively may the locking washer 12 be substituted with, or be in addition to an electrically insulating washer.

The sleeve portion of the guiding- and insulating washer 5 is shown with longitudinal slits and an expanded lower ring on the inside of the corner tube 1 such that the guiding- and insulating washer 5 is held in place in the corner tube 1 before assembly of the corner and the aluminum profile.

The guiding ribs 11 on the plastic shell extending into ribs 16 for stiffening and guiding the aluminum profiles 7, ensure that assembly of the corner and the profile is easier, that the bolt holes are aligned with each other, that the aluminum profile is at the correct angle in relation to the goal, and stability.

The stanchion angle 9 includes a V- shaped to the cross section extending into the corresponding recessed V- portion 22 in the aluminum profile 1. The mutually fitting elements contribute to holding the elements at the right position without exposing the bolts to excessive share forces. This contributes to a more stable assembly even if it not is physical contact between the bolt holes and the bolt 13. The stanchion angle 9 will thereby also contribute substantially to the rigidity and strength of the corner.

The guiding- and insulating washer 5 includes an arch shaped portion with an arch shape that is adapted to the external face of the corner tube and a plane portion with two extending elements that are adapted to the inner guiding portion 24 of the aluminum profile. The plane portion abuts the plane portion of the inner guiding portion 24 of the aluminum profile, and outwards extending elements extending from the plane portion and along sides of the inner guiding portion 24 of the aluminum profile to maintain a correct mutual positioning of the guiding- and insulating washer 5 in relation to the inner guiding portion 24 of the aluminum profile and the corner tube 1. The outwards extending elements extending from the plane portion forms a groove for the inner guiding portion of the aluminum profile.

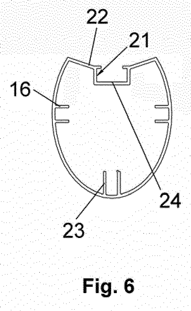

In fig. 6 it is shown an aluminum profile corresponding to the aluminum profiles shown in the other figures. Fig. 6 highlights the guiding- and the reinforcing ribs 16, the T-groove for net hook 21, a recessed V-portion 22 for the stanchion angle (9 on fig. 5), forward reinforcing ribs 23 and inner guiding portion 24. The inner guiding portion 24 is formed by the T-groove for the net hook.

| | | | |
|---|---|---|---|
| 1. | Corner tube | 14. | Soft moulded ring |
| 2. | First shell half | 15. | Tube elbow |
| 3. | Second shell half | 16. | Stiffening and guiding rib |
| 4. | Soft external plastic shell | 17. | Goal |
| 5. | Insulating washer and guide | 18. | Corner element |
| 6. | Threaded portion | 19. | Bolt hole |
| 7. | Aluminum profile | 20 | Threaded sleeve |
| 8. | Aluminum profile | 21 | T-groove for net hook |
| 9. | Stanchion angle | 22 | Recessed V-portion |
| 10. | Stanchions | 23 | Forward stiffening ribs |
| 11. | Guiding rib | 24 | Inner guiding portion |
| 12. | Washer | 25 | First substantially straight corner element |
| 13. | Bolt | 26 | Second substantially straight corner element |

## Claims

1. An aluminum profile joining corner element (18) for joining aluminum profiles (7, 8) with an outline, comprising:
a corner housing with an outline substantially corresponding to the outline of the aluminum profiles (7, 8);
a first and a second substantially straight tubular element (25, 26) extending from the corner housing, wherein the first tubular element (25) forms an angle to the second tubular element (26);
at least one bolt hole (19) extending through the first and the second tubular element respectively (25, 26);
wherein the first and the second substantially straight tubular element (25, 26) and
an elbow are shaped out of one single metal tubular piece and form a corner tube (1):
a guiding- and insulating washer (5) attached in each bolt hole (19), for insulating between the corner tube (1) and the aluminum profile; and
wherein the corner housing surrounds the elbow of the corner tube (1).

2. The aluminum profile joining corner element (18), according to claim 1, wherein the corner housing includes an outer shell of a first plastic material and an external layer of a second plastic material.

3. The aluminum profile joining corner element (18) according to claim 2, wherein the first plastic material is harder than the second plastic material.

4. The aluminum profile joining corner element (18) according to one of the preceding claims wherein the corner housing includes a first shell half (2) and a second shell half (3) connected to the first shell half (2).

5. The aluminum profile joining corner element (18) according to claim 4, wherein the first shell half (2) and the second shell half (3) form the shell of the first plastic material and wherein an external layer of a second plastic material surrounds the first shell half (2) and the second shell half (3).

6. The aluminum profile joining corner element (18) according to one of the preceding claims, wherein the guiding- and insulating washer (5) is shaped of a plastic material and includes an arch shaped portion with an arch adapted to a diameter of the first and the second substantially straight tubular element (25, 26), and a substantially plane portion adapted to an inner face of the aluminum profiles (7, 8) to be joined.

7. A goal (17) for a ballgame including at least two aluminum profile joining corner elements (18) of claim 1, joining at least a first, a second and a third aluminum profile (7, 8) forming a first post, a second post and a crossbar, wherein the aluminum profiles (7,8) include an outline, corresponding to the outline of the corner housing; wherein each post is secured to one of the first substantially straight tubular elements (25) of one of the at least two aluminum profile joining corner elements (18) in at least one end, wherein the first substantially straight tubular element (25) extends internally in the post, and wherein at least one first bolt (13) extends through a wall in the aluminum profile of the post, the guiding- and insulating washer (5), and the bolt hole (19) of the first substantially straight tubular element (25); and wherein the crossbar at each end is secured to one of the second substantially straight tubular elements (26) of the at least two aluminum profile joining corner elements (18), wherein each second substantially straight tubular element (26) extends internally in the crossbar, and wherein at least one second bolt (13) extends through a wall in the aluminum profile of the crossbar, the guiding- and insulating washer (5), and the bolt hole (19) of each second substantially straight tubular element (26).

8. The goal according to claim 7, further including four aluminum profile joining corner elements (18).

9. The goal according to claim 7 or 8, further including at least two corners, each including an L- or V- shaped stanchion angle (9) with bolt holes (19), for attaching a stanchion (10) wherein the stanchion angle (9) includes at least two bolt holes (19), and wherein at least two bolts (13) extend through a locking washer (12), the stanchion angle (9), the aluminum profile (7, 8), the guiding- and insulating washer (5) and the first and second substantially straight tubular element respectively; wherein a threaded element (20) is attached in one of the substantially straight tubular elements (25, 26) for each bolt; and wherein each bolt (13) is screwed into each threaded element (20).

10. The goal according to claim 9, wherein the guiding- and insulating washers (5) are of an electrically insulating material, whereby the bolt holes (19) of the first and second substantially straight tubular elements (25, 26) are electrically isolated in relation to the aluminum profiles (7, 8).

11. The goal according to claim 7, including six aluminum profile joining corner elements (18).

## Patentansprüche

1. Aluminiumprofil-Verbindungseckelement (18) zum Verbinden von Aluminiumprofilen (7, 8) mit einer Kontur, umfassend:
ein Eckgehäuse mit einer Kontur, die im Wesentlichen der Kontur der Aluminiumprofile (7, 8) entspricht;
ein erstes und ein zweites im Wesentlichen gerades Rohrelement (25, 26), die sich von dem Eckgehäuse erstrecken, wobei das erste Rohrelement (25) einen Winkel zu dem zweiten Rohrelement (26) bildet;
mindestens ein Schraubenloch (19), das sich durch das erste bzw. das zweite Rohrelement (25, 26) erstreckt;
wobei das erste und das zweite im Wesentlichen gerade Rohrelement (25, 26) und ein Krümmer aus einem einzigen Metallrohrstück geformt sind und ein Eckrohr (1) bilden;
in jedem Schraubenloch (19) eine Führungs- und Isolierscheibe (5) zur Isolierung zwischen dem Eckrohr (1) und dem Aluminiumprofil; und
wobei das Eckgehäuse den Krümmer des Eckrohres (1) umgibt.

2. Aluminiumprofil-Verbindungseckelement (18) nach Anspruch 1, wobei das Eckgehäuse eine Außenschale aus einem ersten Kunststoffmaterial und eine Außenschicht aus einem zweiten Kunststoffmaterial aufweist.

3. Aluminiumprofil-Verbindungseckelement (18) nach Anspruch 2, wobei das erste Kunststoffmaterial härter ist als das zweite Kunststoffmaterial.

4. Aluminiumprofil-Verbindungseckelement (18) nach einem der vorstehenden Ansprüche, wobei das Eckgehäuse eine erste Schalenhälfte (2) und eine mit der ersten Schalenhälfte (2) verbundene zweite Schalenhälfte (3) aufweist.

5. Aluminiumprofil-Verbindungseckelement (18) nach Anspruch 4, wobei die erste Schalenhälfte (2) und die zweite Schalenhälfte (3) die Schale des ersten Kunststoffmaterials bilden und wobei eine Außenschicht aus einem zweiten Kunststoffmaterial die erste Schalenhälfte (2) und die zweite Schalenhälfte (3) umgibt.

6. Aluminiumprofil-Verbindungseckelement (18) nach einem der vorstehenden Ansprüche, wobei die Führungs- und Isolierscheibe (5) aus einem Kunststoffmaterial geformt sind und einen bogenförmigen Abschnitt mit einem an einen Durchmesser des ersten und des zweiten im Wesentlichen geraden Rohrelements (25, 26) angepassten Bogen und einen im Wesentlichen ebenen Abschnitt aufweisen, der an eine Innenfläche der zu verbindenden Aluminiumprofile (7, 8) angepasst ist.

7. Tor (17) für ein Ballspiel mit mindestens zwei Aluminiumprofil-Verbindungseckelementen (18) nach Anspruch 1, die mindestens ein erstes, ein zweites und ein drittes Aluminiumprofil (7, 8) verbinden, die einen ersten Pfosten, einen zweiten Pfosten und eine Querstange bilden, wobei die Aluminiumprofile (7, 8) eine Kontur aufweisen, die der Kontur des Eckgehäuses entspricht;
wobei jeder Pfosten an mindestens einem Ende an einem der ersten im Wesentlichen geraden Rohrelemente (25) eines der mindestens zwei Aluminiumprofil-Verbindungseckelemente (18) befestigt ist, wobei sich das erste im Wesentlichen gerade Rohrelement (25) im Inneren des Pfostens erstreckt und wobei sich mindestens eine erste Schraube (13) durch eine Wand im Aluminiumprofil des Pfostens, die Führungs- und Isolierscheibe (5) und das Schraubenloch (19) des ersten im Wesentlichen geraden Rohrelements (25) erstreckt; und
wobei die Querstange an jedem Ende an einem der zweiten im Wesentlichen geraden Rohrelemente (26) der mindestens zwei Aluminiumprofil-Verbindungseckelemente (18) befestigt ist, wobei sich jedes zweite im Wesentlichen gerade Rohrelement (26) innerhalb der Querstange erstreckt und wobei sich mindestens eine zweite Schraube (13) durch eine Wand im Aluminiumprofil der Querstange, die Führungs- und Isolierscheibe (5) und das Schraubenloch (19) jedes zweiten im wesentlichen geraden Rohrelements (26) erstreckt.

8. Tor nach Anspruch 7, das ferner vier Aluminiumprofil-Verbindungseckelemente (18) umfasst.

9. Tor nach Anspruch 7 oder 8, das ferner mindestens zwei Ecken umfasst, die jeweils einen L- oder V-förmigen Strebenwinkel (9) mit Schraubenlöchern (19) zur Befestigung einer Strebe (10) enthalten, wobei der Strebenwinkel (9) mindestens zwei Schraubenlöcher (19) aufweist, und wobei sich mindestens zwei Schrauben (13) durch eine Sicherungsscheibe (12), den Strebenwinkel (9), das Aluminiumprofil (7, 8), die Führungs- und Isolierscheibe (5) und das erste bzw. zweite im Wesentlichen gerade Rohrelement erstrecken;
wobei in einem der im Wesentlichen geraden Rohrelemente (25, 26) für jede Schraube ein Gewindeelement (20) angebracht ist; und
wobei jede Schraube (13) in jedes Gewindeelement (20) eingeschraubt wird.

10. Tor nach Anspruch 9, wobei die Führungs- und Isolierscheiben (5) aus einem elektrisch isolierenden Material gefertigt sind, wobei die Schraubenlöcher (19) des ersten und zweiten im Wesentlichen geraden Rohrelements (25, 26) bezogen auf die Aluminiumprofile (7, 8) elektrisch isoliert sind.

11. Tor nach Anspruch 7, das sechs Aluminiumprofil-Verbindungseckelemente (18) umfasst.

## Revendications

1. Élément de coin de jonction de profilé en aluminium (18) destiné à joindre des profilés en aluminium (7, 8) munis d'un contour, comportant :
un boîtier de coin muni d'un contour correspondant sensiblement au contour des profilés en aluminium (7, 8) ;
un premier et un second élément tubulaire sensiblement droits (25, 26) s'étendant depuis le boîtier de coin, le premier élément tubulaire (25) formant un angle avec le second élément tubulaire (26) ;
au moins un trou de boulon (19) s'étendant respectivement à travers les premier et second éléments tubulaires (25, 26) ;
dans lequel les premier et second éléments tubulaires sensiblement droits (25, 26) et un coude sont façonnés dans une seule pièce tubulaire métallique et forment un tube de coin (1) ;
une rondelle de guidage et d'isolation (5) fixée dans chaque trou de boulon (19), destinée à l'isolation entre le tube de coin (1) et le profilé en aluminium ; et le boîtier de coin entourant le coude du tube de coin (1).

2. Élément de coin de jonction de profilé en aluminium (18) selon la revendication 1, dans lequel le boîtier de coin comprend une coque externe constituée d'une première matière plastique et une couche externe constituée d'une seconde matière plastique.

3. Élément de coin de jonction de profilé en aluminium (18) selon la revendication 2, dans lequel la première matière plastique est plus dure que la seconde matière plastique.

4. Élément de coin de jonction de profilé en aluminium (18) selon la revendication 1, dans lequel le boîtier de coin comprend une première moitié de coque (2) et une seconde moitié de coque (3) reliée à la première moitié de coque (2).

5. Élément de coin de jonction de profilé en aluminium (18) selon la revendication 4, dans lequel la première moitié de coque (2) et la seconde moitié de coque (3) forment la coque de la première matière plastique et dans lequel une couche externe d'une seconde matière plastique entoure la première moitié de coque (2) et la seconde moitié de coque (3).

6. Élément de coin de jonction de profilé en aluminium (18) selon l'une quelconque des revendications précédentes, dans lequel la rondelle de guidage et d'isolation (5) est façonnée en matière plastique et comprend une partie en forme d'arc avec un arc adapté à un diamètre du premier et du second élément tubulaire sensiblement droit (25, 26), ainsi qu'une partie sensiblement plane adaptée à une face interne des profilés en aluminium (7, 8) à joindre.

7. But (17) destiné à un jeu de balle comprenant au moins deux éléments de coin de jonction de profilé en aluminium (18) de la revendication 1, joignant au moins un premier, un deuxième et un troisième profilé en aluminium (7, 8) formant un premier poteau, un deuxième poteau et une barre transversale, dans lequel les profilés en aluminium (7, 8) comprennent un contour, correspondant au contour du boîtier de coin ; dans lequel chaque poteau est sécurisé à l'un des premiers éléments tubulaires sensiblement droits (25) de l'un de l'au moins deux éléments de coin de jonction de profilé en aluminium (18) dans au moins une extrémité, le premier élément tubulaire sensiblement droit (25) s'étendant de manière interne dans le poteau, et au moins un premier boulon (13) s'étendant à travers une paroi dans le profilé en aluminium du poteau, dans la rondelle de guidage et d'isolation (5) et dans le trou de boulon (19) du premier élément tubulaire sensiblement droit (25) ; et
dans lequel la barre transversale au niveau de chaque extrémité est sécurisée à l'un des deuxièmes éléments tubulaires sensiblement droits (26) de l'au moins deux éléments de coin de jonction de profilé en aluminium (18), chaque deuxième élément tubulaire sensiblement droit (26) s'étendant de manière interne dans la barre transversale, et au moins un deuxième boulon (13) s'étendant à travers une paroi dans le profilé en aluminium de la barre transversale, dans la rondelle de guidage et d'isolation (5) et dans le trou de boulon (19) de chaque deuxième élément tubulaire sensiblement droit (26).

8. But selon la revendication 7, comprenant en outre quatre éléments de coin de jonction de profilé en aluminium (18).

9. But selon la revendication 7 ou 8, comprenant en outre au moins deux coins, chacun comprenant un angle de colonne en forme de L ou de V (9) avec des trous de boulon (19), destinés à fixer une colonne (10), dans lequel l'angle de colonne (9) comprend au moins deux trous de boulon (19), et dans lequel au moins deux boulons (13) s'étendent respectivement à travers une rondelle de verrouillage (12), l'angle de colonne (9), le profilé en aluminium (7, 8), la rondelle de guidage et d'isolation (5) et les premier et second éléments tubulaires sensiblement droits ;
dans lequel un élément fileté (20) est fixé dans un des éléments tubulaires sensiblement droits (25, 26) pour chaque boulon ; et
dans lequel chaque boulon (13) est vissé dans chaque élément fileté (20).

10. But selon la revendication 9, dans lequel les rondelles de guidage et d'isolation (5) sont constituées d'une matière électriquement isolante, de sorte que les trous de boulon (19) des premier et second éléments tubulaires sensiblement droits (25, 26) sont isolés électriquement par rapport aux profilés en aluminium (7, 8).

11. But selon la revendication 7, comprenant six éléments de coin de jonction de profilé en aluminium (18).
